# EUROPÄISCHE PATENTSCHRIFT

(11) **EP 1 729 108 B1**
(45) Veröffentlichungstag und Bekanntmachung des Hinweises auf die Patenterteilung: **12.10.2011**
(21) Anmeldenummer: 06010094.8
(22) Anmeldetag: 16.05.2006
(51) Int. Cl.: G01N 15/06

(54) **Partikelkonzentrations-Messvorrichtung und Messverfahren**
Particle concentration measuring device and measuring method
Dispositif de mesure de concentration de particules et son procédé de mesure

(30) Priorität: 01.06.2005 DE 102005025181
(43) Veröffentlichungstag der Anmeldung: 06.12.2006
(73) Patentinhaber: SICK Engineering GmbH, 01458 Ottendorf-Okrilla (DE)
(72) Erfinder: Schröter, Gerry, 01239 Dresden (DE); Melcher, Uwe, 01458 Ottendorf-Okrilla (DE)
(74) Vertreter: Manitz, Finsterwald & Partner GbR

(56) Entgegenhaltungen:
- EP-A2- 1 061 356
- WO-A1-2005/022170
- US-A- 3 650 627
- US-A- 5 093 866
- US-A1- 2002 057 433
- US-B1- 6 323 949

## Beschreibung

Die Erfindung betrifft eine Partikelkonzentrations-Messvorrichtung zur Bestimmung einer Partikelkonzentration innerhalb eines Messvolumens innerhalb eines von einem Partikel-enthaltenden Abgas durchströmten Kanals nach dem Prinzip der Transmissionslichtmessung und der Streulichtmessung, wobei die Messvorrichtung wenigstens einen Lichtsender zum Aussenden von Sendelicht in das Messvolumen und wenigstens einen Lichtempfänger aufweist, wobei mittels des Lichtempfängers ein Anteil des durch Partikel im Messvolumen gedämpften Sendelichts detektierbar ist, und wobei mittels des Lichtempfängers ein Anteil des Sendelichts detektierbar ist, der an Partikeln im Messvolumen gestreut wird.

Derartige Messvorrichtungen dienen beispielsweise zur Bestimmung der Konzentration (einschließlich der Zusammensetzung) von Staub- oder Rußpartikeln in industriellen Abgasschornsteinen. Hierfür wird zum einen eine Transmissionslichtmessung durchgeführt, bei der ein Sendelichtstrahl (sichtbares Licht, Ultraviolett oder Infrarot) durch ein Messvolumen - beispielsweise quer durch einen Abgaskanal - geführt wird, wobei mittels eines zugeordneten Lichtempfängers derjenige Anteil des Sendelichts gemessen wird, der den Lichtempfänger lediglich gedämpft beaufschlagt, da ein Teil des Sendelichts von Partikeln im Messvolumen absorbiert wird. Aus der gemessenen Abschwächung des Sendelichts lässt sich die Partikelkonzentration im Messvolumen bestimmen. Zum anderen wird eine Streulichtmessung durchgeführt, bei der der Lichtempfänger einen Anteil des von den Partikeln seitlich gestreuten Sendelichts detektiert. Die Streulichtmessung eignet sich insbesondere zur Bestimmung von vergleichsweise geringen Partikelkonzentrationen.

Bei der Streulichtmessung ist die Menge des zu detektierenden Lichts um mehrere Größenordnungen geringer als die Menge (Intensität) des ausgesendeten Lichts. Insbesondere bei der Streulichtmessung ist es deshalb wichtig, dass der Lichtempfänger lediglich von dem zu messenden Streulicht und nicht von Störlicht des Lichtsenders beaufschlagt wird.

Außerdem ist es bei Messvorrichtungen der erläuterten Art wichtig, dass die optische Grenzfläche zwischen dem Lichtsender der Messvorrichtung und dem Messvolumen möglichst klein ist. Diese optische Grenzfläche muss nämlich an der dem Messvolumen zugewandten Seite permanent mit gereinigter Luft gespült werden, um Ablagerungen von Partikeln hieran zu vermeiden. Derartige Ablagerungen würden anderenfalls das ausgesendete Licht absorbieren oder streuen und somit zu unerwünschten Störlichteffekten führen. Je kleiner die optische Grenzfläche ausfällt, umso zuverlässiger und kostengünstiger kann die erläuterte Luftspülung durchgeführt werden.

Die US-A-5 093 866 beschreibt eine Vorrichtung und ein Verfahren zur Untersuchung der Eigenschaften von Zellen in einem flüssigen Medium, wobei ein erstes Subsystem einen Lichtsender zum Aussenden von sichtbarem oder Infrarotlicht aufweist, das transmittiert oder gestreut wird. Das erste Subsystem besitzt ferner einen Lichtsender zum Aussenden von Fluoreszenz-anregender Strahlung. Ein zweites Subsystem enthält einen Strahlungsdetektor.

Die WO 2005/022170 A beschreibt eine Messvorrichtung zur Bestimmung des Volumenstroms in einem Rohr, wobei zwei Lichtstrahlen durch ein transparentes Fenster in der Rohrwand in dem Rohr fokussiert werden.

Die EP-A-1 061 356 beschreibt einen Partikeldetektor für Gasleitungen, der einen ersten Fotodetektor für eine Transmissionslichtmessung, einen zweiten Fotodetektor für eine Streulichtmessung und eine gemeinsame Lichtquelle aufweist.

Es ist eine Aufgabe der Erfindung, eine Partikelkonzentrations-Messvorrichtung zu schaffen, die einen kompakten Aufbau der Sendereinheit mit einer kleinen optischen Grenzfläche zum Messvolumen besitzt und bei der insbesondere hinsichtlich der Streulichtmessung Störlichteffekte weitestgehend vermieden werden. Sowohl für die Transmissionslichtmessung als auch für die Streulichtmessung sollen optimierte Messbedingungen ermöglicht werden.

Diese Aufgabe wird durch eine Partikelkonzentrations-Messvorrichtung mit den Merkmalen des Anspruchs 1 gelöst.

Der Lichtsender zum Aussenden eines Streulicht-Sendestrahls für die Streulichtmessung wird nachfolgend als Streulichtsender bezeichnet.

Die Messvorrichtung besitzt also für die Transmissionslichtmessung und die Streulichtmessung jeweils einen eigenen Lichtsender, wobei der Transmissionslichtsender und der Streulichtsender derart angeordnet sind, dass ihre Sendestrahlen innerhalb einer gemeinsamen Sendereinheit der Messvorrichtung seitlich versetzt zueinander verlaufen und ein einziges gemeinsames Lichtaustrittsfenster durchqueren, das die optische Grenzfläche zu dem Messvolumen bildet. Mit anderen Worten sind durch die Anordnung des Transmissionslichtsenders und des Streulichtsenders sowie durch die jeweils zugeordnete Sendeoptik eine optische Achse des Transmissionslicht-Sendestrahls und eine optische Achse des Streulicht-Sendestrahls festgelegt. Diese beiden optischen Achsen verlaufen innerhalb der Sendereinheit seitlich versetzt zueinander, wobei die beiden optischen Achsen ein einziges gemeinsames Lichtaustrittsfenster durchqueren. Dabei müssen die Lichtsignale für die Transmissionslichtmessung und für die Streulichtmessung nicht gleichzeitig ausgesendet werden, sondern es ist vielmehr bevorzugt, wenn der Transmissionslicht-Sendestrahl und der Streulicht-Sendestrahl alternierend zueinander ausgesendet werden.

Durch eine derartige Anordnung sind eine Transmissionslichtmessung und eine Streulichtmessung unter jeweils optimalen Messbedingungen möglich, wobei zugleich ein kompakter Aufbau der Messvorrichtung mit einem einzigen Lichtaustrittsfenster von vergleichsweise geringer Öffnungsfläche verwirklicht werden kann. Dies vereinfacht und verbilligt die erforderliche Luftspülung des Lichtaustrittsfensters zur Vermeidung von Partikelablagerungen.

Indem der Transmissionslicht-Sendestrahl und der Streulicht-Sendestrahl versetzt zueinander verlaufen, können diese Lichtstrahlen verschiedene Ziele beaufschlagen, beispielsweise einen Reflektor oder einen Transmissionslichtempfänger für die Transmissionslichtmessung bzw. eine Lichtfalle für die Streulichtmessung. Somit werden ungeachtet des kompakten Aufbaus der Messvorrichtung unterschiedliche optische Wege der Sendestrahlen für das jeweils gewünschte Messprinzip (Transmissionslichtmessung oder Streulichtmessung) ermöglicht. Insbesondere ist auch kein intermittierendes Umschalten oder Bewegen einer Strahlumlenkungseinrichtung erforderlich, um alternierend den Strahlengang für die Transmissionslichtmessung und den Strahlengang für die Streulichtmessung festzulegen, sondern während des Messbetriebs können der Transmissionslicht-Sendestrahl und der Streulicht-Sendestrahl in einer starren Relativlage verbleiben. Durch den Verzicht auf derartige bewegliche Strahlumlenkungseinrichtungen wird nicht nur der konstruktive Aufwand verringert, sondern es werden auch zusätzliche Abschwächungen der Lichtsignale und mögliche Quellen für unerwünschte Störlichteffekte vermieden.

Durch den Einsatz von zwei separaten Lichtsendern für die Transmissionslichtmessung und die Streulichtmessung wird ebenfalls erreicht, dass der Transmissionslicht-Sendestrahl und der Streulicht-Sendestrahl durch ein gemeinsames Lichtaustrittsfenster geführt werden können und dennoch unterschiedliche Ziele beaufschlagen können, ohne dass zusätzliche optische Bauelemente für eine variable Strahlumlenkung erforderlich sind. Außerdem wird durch den Einsatz von zwei separaten Lichtsendern eine verbesserte Anpassung an die jeweilige Messaufgabe erreicht. So kann beispielsweise für die Transmissionslichtmessung eine Leuchtdiode eingesetzt werden, deren Sendelicht durch eine zugeordnete Sendeoptik aufgeweitet wird, um innerhalb des Messvolumens eine Absorption an einem vergrößerten Strahlquerschnitt und somit eine höhere Messempfindlichkeit zu erreichen. Für die Streulichtmessung kann demgegenüber als Lichtsender eine Laserdiode mit Kollimationsoptik eingesetzt werden, die einen Sendestrahl mit vergleichsweise geringem Querschnitt, jedoch hoher Intensität emittiert.

Für einen besonders kompakten Aufbau der Messvorrichtung ist es bevorzugt, wenn für den Transmissionslicht-Sendestrahl und den Streulicht-Sendestrahl eine gemeinsame Sendeoptik vorgesehen ist, die innerhalb der Sendereinheit vor dem Lichtaustrittsfenster angeordnet oder durch das Lichtaustrittsfenster selbst gebildet ist, wobei diese gemeinsame Sendeoptik als eine geteilte Optik (geteilte Linse) mit wenigstens zwei separaten Abbildungsabschnitten für das Transmissionslicht und das Streulicht ausgebildet ist. Mit anderen Worten ist für die Sendestrahlen der Transmissionslichtmessung und der Streulichtmessung eine Linse mit zwei verschiedenen Abschnitten vorgesehen, die optisch unterschiedlich wirksam sind.

Insbesondere kann der Transmissionslicht-Abbildungsabschnitt einer derartigen geteilten Optik als Sammellinse ausgebildet sein, um auf den Transmissionslicht-Sendestrahl entsprechend strahlformend zu wirken.

Der Streulicht-Abbildungsabschnitt der geteilten Optik ist vorzugsweise planparallel oder als Öffnung (Loch) ausgebildet, so dass hinsichtlich des Streulicht-Sendestrahls keine strahlformende Wirkung vorgesehen ist. Der Streulicht-Abbildungsabschnitt ist vorzugsweise an einem Randbereich des Transmissionslicht-Abbildungsabschnitts oder innerhalb des Transmissionslicht-Abbildungsabschnitts der geteilten Optik angeordnet.

Gemäß einer vorteilhaften Ausführungsform verlaufen der Transmissionslicht-Sendestrahl und der hierzu seitlich versetzte Streulicht-Sendestrahl innerhalb der Sendereinheit - zumindest in der Umgebung des Lichtsaustrittsfensters - geringfügig schräg geneigt, insbesondere quasiparallel zueinander. Hierdurch können an einer zugeordneten Lichtbeaufschlagungseinheit, die bezüglich der Sendereinheit an einer gegenüberliegenden Seite des Messvolumens angeordnet ist und beispielsweise einen Reflektor oder Lichtempfänger (für die Transmissionslichtmessung) und eine Lichtfalle und einen Lichtempfänger (für die Streulichtmessung) enthält, die daran vorgesehenen Komponenten einen gewünschten Abstand zueinander einnehmen.

Insbesondere können der Transmissionslicht-Sendestrahl und der Streulicht-Sendestrahl sich außerhalb der Sendereinheit kreuzen. Für bestimmte Streuwinkel des ausgesendeten Lichts, die im Rahmen der Streulichtmessung berücksichtigt werden sollen, ermöglicht diese Ausführungsform einen besonders kompakten Aufbau der genannten Lichtbeaufschlagungseinheit. Mit anderen Worten kann aufgrund des zueinander schräg geneigten Verlaufs des Transmissionslicht-Sendestrahls und des Streulicht-Sendestrahls bei vergleichsweise geringem Abstand des Streulichtempfängers von dem Reflektor bzw. dem Transmissionslichtempfänger innerhalb der Lichtbeaufschlagungseinheit noch ein gewünschter vorbestimmter Streulichtwinkel berücksichtigt bzw. beobachtet werden.

Weiterhin ist es bevorzugt, wenn zumindest der Transmissionslichtsender, der Streulichtsender und die Sendeoptiken, die den jeweiligen Verlauf des Transmissionslicht-Sendestrahls und des Streulicht-Sendestrahls bzw. den jeweiligen Verlauf der entsprechenden optischen Sendeachsen festlegen, im Messbetrieb der Messvorrichtung in einer starren Relativlage angeordnet sind. Mit anderen Worten soll für aufeinander folgende Transmissionslichtmessungen und Streulichtmessungen kein ständiges Umschalten oder Bewegen von Strahlumlenkungseinrichtungen oder sonstigen optischen Bauelementen erforderlich sein. Durch die starre Relativanordnung der optischen Bauelemente wird der Herstellungsaufwand verringert. Im Rahmen dieser bevorzugten starren Relativlage der verwendeten optischen Bauelemente kann jedoch die Möglichkeit vorgesehen sein, einzelne Bauelemente für Justierungsmaßnahmen außerhalb des Messbetriebs relativ zueinander zu justieren und zu diesem Zweck geringfügig zu bewegen oder zu versetzen. Eine derartige Justage wird insbesondere werksseitig oder im Zusammenhang mit der Montage der Messvorrichtung am Einsatzort durchgeführt, um die optische Achse des Transmissionslicht-Sendestrahls und die optische Achse des Streulicht-Sendestrahls relativ zueinander auszurichten.

Hinsichtlich der Streulichtmessung ist es bevorzugt, wenn das Gesichtsfeld des Streulichtempfängers von dem genannten Lichtaustrittsfenster der Sendereinheit weg geneigt ist. Mit anderen Worten soll die optische Achse des Streulichtempfängers bzw. der zugeordneten Empfangsoptik bezüglich der optischen Achse des Transmissionslicht-Sendestrahls im Messvolumen schräg verlaufen. Hierdurch ist gewährleistet, dass der Streulichtempfänger nicht von eventuellem Störlicht beaufschlagt wird, das an dem Lichtaustrittsfenster reflektiert oder gestreut wird.

Die Transmissionslichtmessung kann als so genannte Zwei-Weg-Messung durchgeführt werden, bei der ein Transmissionslichtempfänger in der Sendereinheit angeordnet ist und an einer gegenüberliegenden Seite des Messvolumens ein Reflektor angeordnet ist, der den Transmissionslicht-Sendestrahl reflektiert, so dass dieser das Messvolumen zweimal durchläuft. Alternativ hierzu wird eine Ein-Weg-Messung durchgeführt, bei der ein Transmissionslichtempfänger an einer der Sendereinheit gegenüberliegenden Seite des Messvolumens angeordnet ist.

Der zueinander seitlich versetzte Verlauf des Transmissionslicht-Sendestrahls und des Streulicht-Sendestrahls und die Verwendung eines einzigen gemeinsamen Lichtaustrittsfensters für die beiden Sendestrahlen ermöglicht - wie bereits erläutert -eine vergleichsweise geringe Fläche des Lichtaustrittsfensters. Dies ist hinsichtlich des erforderlichen Aufwands für die Luftspülung des Lichtaustrittsfensters und hinsichtlich der Vermeidung von Störlichteffekten an dem Lichtaustrittsfenster von Vorteil. Für die Bemessung der optischen Grenzfläche der Messvorrichtung bzw. des genannten Lichtaustrittsfensters der Sendereinheit muss jedoch auch das Erfordernis berücksichtigt werden, dass die Sendestrahlen bezüglich einer Lichtbeaufschlagungseinheit justierbar und zu diesem Zweck versetzbar sein sollen. Mit anderen Worten ist für die Bemessung der Öffnungsfläche des Lichtaustrittsfensters zu berücksichtigen, dass der Transmissionslicht-Sendestrahl und der Streulicht-Sendestrahl nach der Montage der Sendereinheit am Einsatzort (z.B. Kanalwand) noch bezüglich der Lichtbeaufschlagungseinheit justiert werden müssen, die üblicherweise an der gegenüberliegenden Kanalwand angeordnet ist und beispielsweise einen Reflektor oder Lichtempfänger für die Transmissionslichtmessung sowie eine Lichtfalle und einen Lichtempfänger für die Streulichtmessung enthält. Eine möglichst genaue Ausrichtung ist wichtig, um für die Lichtempfangssignale ein hohes Signal/Rausch-Verhältnis zu erzielen und um Störlichteffekte zu vermeiden. Deshalb ist die Möglichkeit einer genauen Justierung der Messvorrichtung wünschenswert, die jedoch keine Vergrößerung des Lichtaustrittsfensters der Sendereinheit erfordern darf.

Unter diesen Gesichtspunkten ist gemäß einer vorteilhaften Weiterbildung der Erfindung vorgesehen, dass die Ausrichtung des Transmissionslicht-Sendestrahls und des Streulicht-Sendestrahls durch Verschwenken einer Trägereinrichtung justierbar ist, an der der Transmissionslichtsender, der Streulichtsender und eine oder mehrere Sendeoptiken befestigt sind, die den Verlauf des Transmissionslicht-Sendestrahls und den Verlauf des Streulicht-Sendestrahls festlegen. Die Ausrichtung der optischen Sendeachsen bezüglich der genannten Lichtbeaufschlagungseinheit (Reflektor, Lichtempfänger, Lichtfalle) wird also durch ein Verschwenken einer stabilen Trägereinrichtung justiert, an der zumindest die Lichtsender und die zugeordnete Sendeoptik starr montiert sind. Durch das gemeinsame Verschwenken von Lichtsender und Sendeoptik ist gewährleistet, dass das gesamte optische System bewegt wird und somit seine optischen Eigenschaften nicht ändert.

Die optischen Bauelemente, die den Verlauf und die Ausrichtung der optischen Sendeachsen festlegen, sind an der Trägereinrichtung in einer vorbestimmten Relativlage befestigt. Dies schließt zwar nicht aus, dass werksseitig eine manuelle Justierung beispielsweise eines Lichtsenders erfolgt, zum Beispiel um den Streulichtsender relativ zu dem Transmissionslichtsender zu justieren. Im eigentlichen Messbetrieb nehmen die optischen Bauelemente jedoch eine starre, d.h. dauerhaft festgelegte Relativlage zueinander ein.

Durch die genannte Schwenkbewegung der Trägereinrichtung führen die optischen Sendeachsen gemeinsam eine Kippbewegung aus. Insbesondere kann eine Schwenkbewegung um zwei senkrecht zueinander verlaufende Schwenkachsen vorgesehen sein, um eine freie Verschwenkbarkeit der optischen Sendeachsen (Transmissionslicht-Sendestrahl und Streulicht-Sendestrahl) in beliebiger Richtung zu gestatten.

Insbesondere kann die Verschwenkbarkeit bezüglich des Lichtaustrittsfensters der Sendereinheit erfolgen. Mit anderen Worten ist die Trägereinrichtung um wenigstens eine Schwenkachse verschwenkbar, die an dem Lichtaustrittsfenster oder benachbart hierzu verläuft. Hierdurch ist gewährleistet, dass trotz der Möglichkeit des Justierens der optischen Sendeachsen diese weiterhin stets das Lichtaustrittsfenster durchqueren, ohne dass ein vergrößertes Lichtaustrittsfenster vorgesehen werden muss. Die erläuterte Anlenkung der genannten Trägereinrichtung an dem Lichtaustrittsfenster kann beispielsweise durch einen Hohlzapfeneingriff oder eine Kugelgelenkverbindung erfolgen.

Die erläuterte Justagemöglichkeit gestattet hinsichtlich der verwendeten mechanischen Komponenten der Messvorrichtung vergleichsweise große Toleranzen. Dies begünstigt eine kostengünstige Herstellung. Vor allem kann bei der Endmontage der Messvorrichtung am Einsatzort die erforderlich Justierung zeitsparend und somit kostengünstig erfolgen, da die Verschwenkbarkeit der genannten Trägereinrichtung eine einfache und schnelle Justierung ermöglicht. Geometrische Veränderungen der Messumgebung - beispielsweise temperaturbedingte Ausdehnungseffekte - machen sich allenfalls geringfügig bemerkbar, da die optischen Komponenten auf einem gemeinsamen stabilen Träger fest montiert sind. Gegenüber bekannten Messvorrichtungen, die für die Justage bewegliche optische Bauelemente zur variablen Strahlumlenkung verwenden, verzichtet die erläuterte Weiterbildung auf zusätzliche optische Bauelemente, die beispielsweise eine unerwünschte Absorption der Lichtsignale oder Störlichteffekte bewirken können.

Gemäß einer besonders vorteilhaften Ausführungsform ist eine automatische Selbstjustage der Messvorrichtung vorgesehen. Hierfür besitzt die Messvorrichtung einen ortsauflösenden Transmissionslichtempfänger, der mit einer Auswerte- und Steuereinrichtung verbunden ist. Diese erzeugt in Abhängigkeit von Lichtempfangssignalen des Transmissionslichtempfängers Justagesteuersignale für eine Antriebseinrichtung, durch die die genannte Trägereinrichtung in Abhängigkeit von den Justagesteuersignalen motorisch verschwenkt wird. Der ortsauflösende Transmissionslichtempfänger detektiert also die aktuelle Ausrichtung der optischen Achse des Transmissionslicht-Sendestrahls (und somit auch die Ausrichtung der optischen Achse des Streulicht-Sendestrahls). Erforderlichenfalls veranlasst die Auswerte- und Steuereinrichtung eine Bewegung der Trägereinrichtung, um die Ausrichtung zu korrigieren.

Durch eine derartige automatische Selbstjustage vereinfacht sich die Endmontage der Messvorrichtung am Einsatzort noch weiter. Der Monteur muss lediglich eine manuelle Grobjustage der Ausrichtung der optischen Sendeachse bezüglich der gegenüberliegenden Lichtbeaufschlagungseinheit vornehmen. Die Feinjustage kann dann durch entsprechende Ansteuerung der Antriebseinrichtung mittels der Auswerte- und Steuereinrichtung automatisch erfolgen. Vor allem können auch allmähliche geometrische Veränderungen der Messumgebung - beispielsweise temperaturbedingte Ausdehnungseffekte - erfasst und korrigiert werden.

Die Erfindung bezieht sich auch auf ein Verfahren zur Bestimmung einer Partikelkonzentration innerhalb eines Messvolumens mit den Merkmalen des Anspruchs 17.

Die Erfindung wird nachfolgend lediglich beispielhaft unter Bezugnahme auf die Zeichnungen erläutert.
- Fig. 1: zeigt den Aufbau einer ersten Ausführungsform einer Partikelkonzentrations-Messvorrichtung.
- Fig. 2: zeigt eine geteilte Sendeoptik für den Transmissionslicht-Sendestrahl und den Streulicht-Sendestrahl in einer Vorderansicht.
- Fig. 3: zeigt einen ortsauflösenden Transmissionslichtempfänger in einer Vorderansicht.
- Fig. 4: zeigt den Aufbau einer weiteren Ausführungsform einer Partikelkonzentrations-Messvorrichtung.

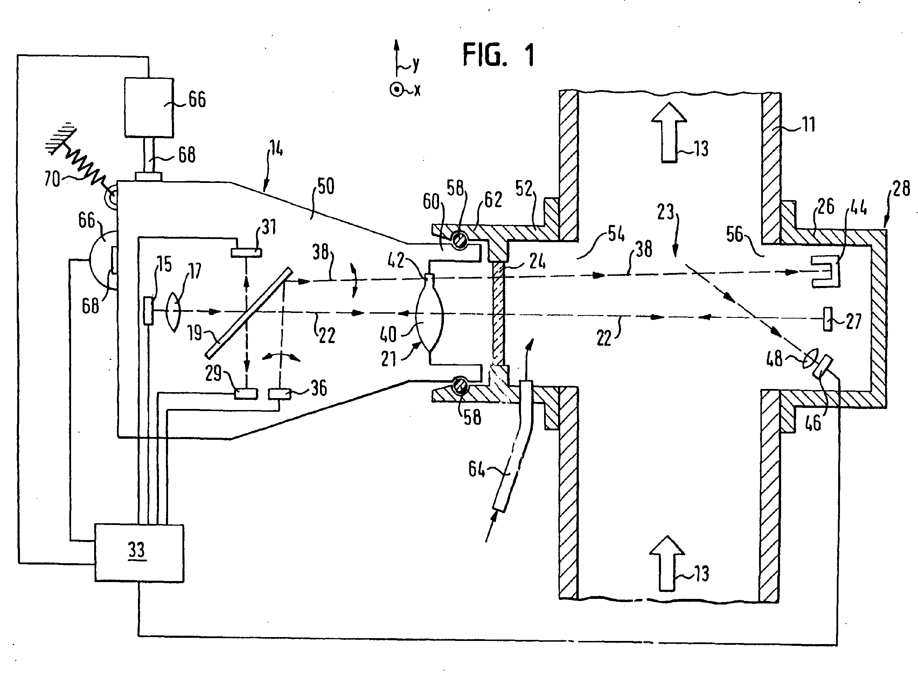

Fig. 1 zeigt in einer Querschnittsansicht einen Kanal 11, der entlang einer Richtung 13 von unten nach oben von einem Abgas durchströmt wird. Das Abgas enthält Partikel, deren Konzentration nach dem Prinzip der Transmissionslichtmessung und/oder der Streulichtmessung bestimmt werden soll.

Für die genannte Transmissionslichtmessung besitzt eine Messvorrichtung innerhalb einer Sendereinheit 14 einen Transmissionslichtsender 15, der beispielsweise als Leuchtdiode ausgebildet ist. Der Transmissionslichtsender 15 sendet über eine erste Sendeoptik 17, einen Strahlenteiler 19 und eine zweite Sendeoptik 21 einen aufgeweiteten Transmissionslicht-Sendestrahl 22 in Richtung eines Messvolumens 23 innerhalb des Kanals 11. Die Anordnung von Transmissionslichtsender 15, erster Sendeoptik 17 und zweiter Sendeoptik 21 definieren hierbei die optische Achse des Transmissionslicht-Sendestrahls 22. Zwischen der zweiten Sendeoptik 21 und dem Messvolumen 23 durchläuft der Transmissionslicht-Sendestrahl 22 ein Lichtaustrittsfenster 24, das als planparallele transparente Platte ausgebildet ist und als optische Grenzfläche die Sendereinheit 24 von dem Messvolumen 23 trennt. Nach Durchlaufen des Messvolumens 23 beaufschlagt der Transmissionslicht-Sendestrahl 22 einen innerhalb einer Abdeckhaube 26 angeordneten Reflektor 27. Der Reflektor 27 und die Abdeckhaube 26 sind Teil einer Lichtbeaufschlagungseinheit 28, die der Sendereinheit 14 bezüglich des Messvolumens 28 gegenübersteht.

An dem Reflektor 27 wird das Transmissionssendelicht reflektiert und durch das Messvolumen 23 über die zweite Sendeoptik 21 mittels des Strahlenteilers 19 auf einen Transmissionslichtempfänger 29 gelenkt. Zwischen dem Reflektor 27 und dem Strahlenteiler 19 fallen der optische Weg des ausgesendeten Transmissionssendelichts und der optische Weg des reflektierten Transmissionssendelichts zusammen, d.h. die optische Sendeachse und die optische Empfangsachse des Transmissionslicht-Sendestrahls 22 sind identisch.

Ein Teil des von dem Transmissionslichtsender 15 abgegebenen Transmissionssendelichts wird über den Strahlenteiler 19 direkt - also ohne Durchlaufen des Messvolumens 23 - auf einen optionalen Referenzlichtempfänger 31 umgelenkt.

Der Transmissionslichtsender 15, der Transmissionslichtempfänger 29 und der Referenzlichtempfänger 31 sind mit einer Auswerte- und Steuereinrichtung 33 verbunden, die beispielsweise durch einen Mikroprozessor gebildet ist. Die Auswerte- und Steuereinrichtung 33 steuert den Transmissionslichtsender 15 zum Aussenden des Transmissionslicht-Sende-strahls 22 an und wertet die Lichtempfangssignale aus, die von den Lichtempfängern 29, 31 erzeugt und ausgegeben werden. Da die Lichtsignale, die den Transmissionslichtempfänger 29 erreichen, das Messvolumen 23 zweifach durchlaufen haben und dabei von den im Kanal 11 befindlichen Partikeln teilweise absorbiert worden sind, kann die Auswerte- und Steuereinrichtung 33 durch Vergleich der Lichtempfangssignale des Transmissionslichtempfängers 29 mit den (ungeschwächten) Lichtempfangssignalen des Referenzlichtempfängers 31 die Reduzierung der Transmission des Lichts im Messvolumen 23 bestimmen, die durch eine entsprechende Partikelkonzentration verursacht wird.

Zusätzlich zu der erläuterten Zwei-Weg-Transmissionslichtmessung kann die gezeigte Messvorrichtung eine Streulichtmessung durchführen. Zu diesem Zweck ist an der Sendereinheit 14 zusätzlich ein Streulichtsender 36 vorgesehen, der beispielsweise als Laserdiode ausgebildet ist und mit einer zugeordneten Sendeoptik zur Strahlfokussierung (nicht gezeigt) ausgestattet sein kann. Der Streulichtsender 36 sendet aufgrund entsprechender Steuersignale der Auswerte- und Steuereinrichtung 33 alternierend zu den Lichtsignalen des Transmissionslichtsenders 15 einen Streulicht-Sendestrahl 38 aus. Dieser Streulicht-Sendestrahl 38 wird an einem voll verspiegelten Abschnitt des Strahlenteilers in Richtung des Messvolumens 23 umgelenkt. Dabei verläuft der kollimierte Streulicht-Sendestrahl 38 seitlich versetzt - und zwar quasiparallel benachbart - zu der optischen Achse des Transmissionslicht-Sendestrahls 22.

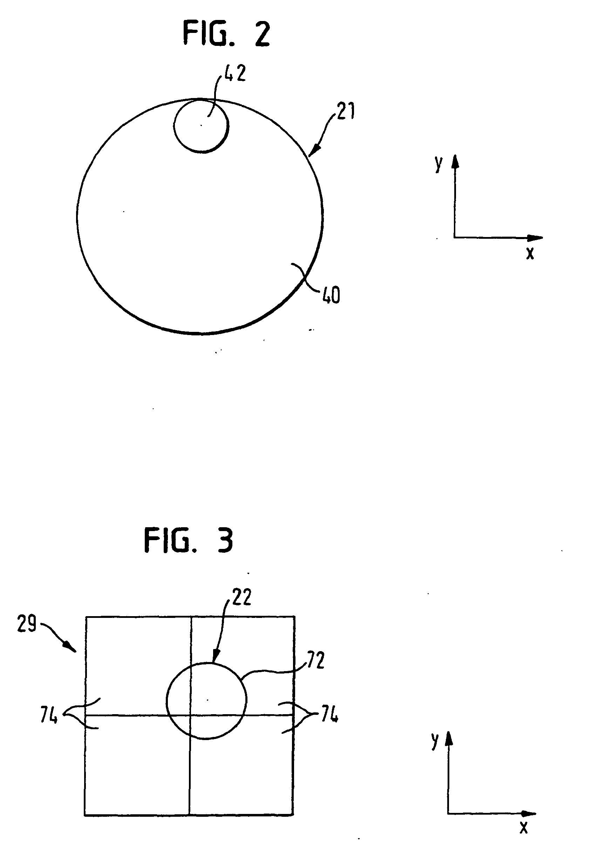

Der Streulicht-Sendestrahl 38 durchläuft - ebenso wie der Transmissionslicht-Sendestrahl 22 - die zweite Sendeoptik 21 sowie das Lichtaustrittsfenster 24. Allerdings erfolgt an der zweiten Sendeoptik 21 keine besondere Strahlformung oder -umlenkung des Streulicht-Sendestrahls 38. Die zweite Sendeoptik 21 ist nämlich als eine geteilte Linse mit einem Transmissionslicht-Abbildungsabschnitt 40 und einem Streulicht-Abbildungsabschnitt 42 ausgebildet. Der Transmissionslicht-Abbildungsabschnitt 40 wirkt für den Transmissionslicht-Sendestrahl 22 als Sammellinse, während der Streulicht-Sendestrahl 38 lediglich den planparallel ausgebildeten Streulicht-Abbildungsabschnitt 42 durchläuft. Der Streulicht-Abbildungsabschnitt 42 ist an einem Randbereich der zweiten Sendeoptik 21 bzw. des Transmissionslicht-Abbildungsabschnitts 40 vorgesehen, wie in der Vorderansicht der zweiten Sendeoptik 21 gemäß Fig. 2 beispielsweise für eine Kreisform des Streulicht-Abbildungsabschnitts 42 gezeigt ist.

Nach dem Durchlaufen des Messvolumens 23 wird der Streulicht-Sendestrahl 38 in einer Lichtfalle 44 absorbiert, die innerhalb der Lichtbeaufschlagungseinheit 28 neben dem Reflektor 27 angeordnet ist. Aufgrund des quasiparallelen Verlaufs des Transmissionslicht-Sendestrahls 22 und des Streulicht-Sendestrahl 38 relativ zueinander können der Reflektor 27 und die Lichtfalle 44 innerhalb der Lichtbeaufschlagungseinheit 28 einen größeren Abstand zueinander einnehmen als der gegenseitige Abstand des Transmissionslicht-Sendestrahls 22 und des Streulicht-Sendestrahls 38 innerhalb der Sendereinheit 14. Vorzugsweise ist die Ausrichtung des Streulicht-Sendestrahls 38 am Streulichtsender 36 bzw. der Winkel zwischen dem Transmissionslicht-Sendestrahl 22 und dem Streulicht-Sendestrahl 38 geringfügig verstellbar, um in Abhängigkeit von der Tiefe des Messvolumens 23 (Durchmesser des Kanals 11) eine Anpassung an einen vorbestimmten Abstand von Reflektor 27 und Lichtfalle 44 zu ermöglichen.

Benachbart zu dem Reflektor 27 ist innerhalb der Abdeckhaube 26 der Lichtbeaufschlagungseinheit 28 auch ein Streulichtempfänger 46 angeordnet, der beispielsweise als Photodiode oder Lawinenphotodiode ausgebildet ist und dem eine Empfangsoptik 48 (z.B. Sammellinse) zugeordnet ist. Der Streulichtempfänger 46 detektiert denjenigen Anteil des Streulicht-Sendestrahls 38, der innerhalb des Messvolumens 23 von den darin enthaltenen Partikeln in einem bestimmten Winkel seitlich nach vorne in Richtung des Gesichtsfelds des Streulichtempfängers 46 gestreut wird. Der Streulichtempfänger 46 übermittelt entsprechende Lichtempfangssignale an die Auswerte- und Steuereinrichtung 33.

Die an der Sendereinheit 14 für die Transmissionslichtmessung vorgesehenen optischen Bauelemente 15, 17, 19, 21, 31 und die für die Streulichtmessung vorgesehenen optischen Bauelemente 36, 19, 21 nehmen eine vorbestimmte Relativlage zueinander ein, d.h. das gezeigte optische System ändert seine optischen Eigenschaften während des Messbetriebs nicht. Hierfür sind die genannten optischen Bauelemente an einer gemeinsamen stabilen Trägerplattform 50 starr montiert. Die Trägerplattform 50 ist an einem Befestigungsflansch 52 angelenkt, der an dem Kanal 11 montiert ist und dort eine erste Kanalöffnung 54 umgibt. In Flucht zu dieser ersten Kanalöffnung 54 ist an der gegenüberliegenden Seite des Kanals 11 eine zweite Kanalöffnung 56 für die bereits genannte Lichtbeaufschlagungseinheit 28 ausgebildet.

Die Anlenkung der Trägerplattform 50 an dem Befestigungsflansch 52 erfolgt über einen elastischen O-Ring 58, der in eine jeweilige Ringnut an einem Hohlzapfenabschnitt 60 der Trägerplattform 50 bzw. einem Kragenabschnitt 62 des Befestigungsflansches 52 im Wesentlichen formschlüssig eingesetzt ist. Hierdurch ist die Trägerplattform 50 bezüglich des Befestigungsflansches 52 innerhalb eines vorbestimmten Raumwinkels frei schwenkbar, d.h. das Verschwenken der Trägerplattform 50 kann bezüglich der Darstellung gemäß Fig. 1 senkrecht zu der Darstellungsebene und/oder in vertikaler Richtung erfolgen (x/y-Verschwenkbarkeit). Somit ist für eine Justage der Messvorrichtung ein Verschwenken der Trägerplattform 50 bezüglich des Lichtaustrittsfensters 24 möglich, wie nachfolgend noch erläutert wird.

Um eine Verschmutzung des Lichtaustrittsfensters 24 durch die mit dem Abgas mitgeführten Partikel zu verhindern, wird das Lichtaustrittsfenster 24 ständig mit gereinigter Luft gespült, die über eine Reinigungsluftleitung 64 auf das Lichtaustrittsfenster 24 gerichtet wird und schließlich durch die Kanalöffnung 54 in den Innenraum des Kanals 11 entweicht. Selbstverständlich kann auch an der gegenüberliegenden Lichtbeaufschlagungseinheit 28 eine entsprechende Schutzmaßnahme (Abschlussfenster mit Luftspülung) vorgesehen sein.

Eine Besonderheit der in Fig. 1 gezeigten Messvorrichtung besteht darin, dass innerhalb der Sendereinheit 14 der Transmissionslicht-Sendestrahl 22 und der Streulicht-Sendestrahl 38 zwar seitlich versetzt zueinander verlaufen, jedoch dennoch das gemeinsame (einzige) Lichtaustrittsfenster 24 in Richtung des Messvolumens 23 durchlaufen. Hierdurch wird trotz der zueinander versetzten Strahlführung erreicht, dass die Öffnungsfläche des Lichtaustrittsfensters 24 vergleichsweise gering bemessen werden kann. Dadurch kann die erläuterte Luftspülung über die Reinigungsluftleitung 64 mit hoher Zuverlässigkeit durchgeführt werden, so dass Partikelablagerungen und hierdurch verursachte Störlichteffekte zuverlässig vermieden werden. Außerdem ist lediglich ein geringer Volumenstrom der zugeführten Reinigungsluft erforderlich, so dass ein kostengünstiger Betrieb der Messvorrichtung ermöglicht wird.

Trotz des geringflächig ausgebildeten Lichtaustrittsfensters 24 können für die Transmissionslichtmessung und die Streulichtmessung unterschiedliche Ziele vom jeweiligen Sendelicht beaufschlagt werden (Reflektor 27 und Transmissionslichtempfänger 29 einerseits bzw. Lichtfalle 44 andererseits). Somit ist für die abwechselnde Durchführung einer Transmissionslichtmessung und einer Streulichtmessung kein Umschalten oder sonstiges Bewegen einer Strahlumlenkungseinrichtung erforderlich. Die beiden Lichtsender 15, 36 müssen lediglich mittels der Auswerte- und Steuereinrichtung 33 entsprechend alternierend angesteuert werden.

Durch die Verschwenkbarkeit der Trägerplattform 50 bezüglich des Lichtaustrittsfensters 24 können die Sendereinheit 14 und insbesondere der Transmissionslicht-Sendestrahl 22 und der Streulicht-Sendestrahl 38 am Einsatzort der Messvorrichtung (Kanal 11) gemeinsam auf die Lichtbeaufschlagungseinheit 28 mit dem Reflektor 27 und der Lichtfalle 44 ausgerichtet werden, ohne dass es zusätzlicher beweglicher optischer Bauelemente bedarf. Vor allem bleibt der vorstehend erläuterte Vorteil eines geringflächigen Lichtaustrittsfensters 24 erhalten. Solange nämlich die Schwenkachsen für die Verschwenkbarkeit der Trägerplattform 50 an dem Lichtaustrittsfenster 24 oder in dessen Nähe verlaufen, ist gewährleistet, dass auch nach einer Justagebewegung der Trägerplattform 50 die Sendestrahlen 22, 38 stets das Lichtaustrittsfenster 24 durchqueren.

Insbesondere kann eine automatische Selbstjustage der Sendereinheit 14 auf einfache Weise verwirklicht werden. Hierfür kann das Verschwenken der Trägerplattform 50 und somit des Transmissionslicht-Sendestrahls 22 und des Streulicht-Sendestrahls 38 mittels zweier Stellmotoren 66 erfolgen. Diese greifen jeweils über einen Stößel 68 an der Trägerplattform 50 an, wobei für die erläuterte x/y-Verschwenkbarkeit ein linearer Stellantrieb in zwei zueinander senkrechte Richtungen verwirklicht ist. Eine Zugfeder 70 sorgt für eine Vorspannung der Trägerplattform 50 entgegen der jeweiligen Angriffsrichtung der beiden Stellmotoren 66, so dass die Trägerplattform 50 spielfrei gelagert ist.

Die Ansteuerung der Stellmotoren 66 erfolgt mittels der Auswerte- und Steuereinrichtung 33 aufgrund entsprechender Justagesteuersignale, die in Abhängigkeit von den Lichtempfangssignalen des Transmissionslichtempfängers 29 erzeugt werden. Dies wird nachfolgend im Zusammenhang mit Fig. 3 erläutert.

Fig. 3 zeigt den Transmissionslichtempfänger 29 in einer Vorderansicht, wobei der Transmissionslichtempfänger 29 von dem Transmissionslicht-Sendestrahl 22 beaufschlagt wird, der als Lichtfleck 72 erscheint. Der Transmissionslichtempfänger 29 ist ortsauflösend ausgebildet, insbesondere als ein Quadrantensensor mit vier photosensitiven Empfangselementen 74. Diese sind beispielsweise durch Photodioden gebildet und erzeugen jeweils ein eigenes Lichtempfangssignal für die Auswerte- und Steuereinrichtung 33 (Fig. 1).

Durch Vergleich der Lichtempfangssignale der Paare von in x-Richtung benachbarten Empfangselementen 74 und von in y-Richtung benachbarten Empfangselementen 74 kann die Auswerte- und Steuereinrichtung 33 die Lage des Lichtflecks 72 an dem Transmissionslichtempfänger 29 ermitteln. Aufgrund einer derartigen Auswertung werden Justagesteuersignale für die Stellmotoren 66 erzeugt. Durch eine entsprechende x/y-Verschwenkung der Trägerplattform 50 wird bewirkt, dass die optische Achse des Transmissionslicht-Sendestrahls 22 und somit die in vorbestimmter Relativlage hierzu versetzt verlaufende optische Achse des Streulicht-Sendestrahls 38 auf die Lichtbeaufschlagungseinheit 28 ausgerichtet werden, und dass der ortsauflösende Transmissionslichtempfänger 29 dementsprechend im Zentrum der lichtempfindlichen Fläche von dem reflektierten Sendelicht beaufschlagt wird.

Diese automatische Selbstjustage kann durchgeführt werden, ohne dass die optischen Eigenschaften des werksseitig bereits montierten und justierten optischen Systems auf der Trägerplattform 50 geändert werden müssen. Durch periodische Wiederholung der automatischen Selbstjustage zwischen dem eigentlichen Messbetrieb können auch allmähliche geometrische Veränderungen der Messumgebung bzw. des Kanals 11 kompensiert werden. Die Verwirklichung der automatischen Selbstjustage erfordert keine zusätzlichen optischen Bauelemente, die zu einer unerwünschten Absorption des ausgesendeten und/oder empfangenen Lichts oder zu Störlichteffekten führen können.

Alternativ zu der Darstellung gemäß Fig. 1 kann auch eine Ein-Weg-Transmissionslichtmessung vorgesehen sein. In diesem Fall entfällt der Reflektor 27, und an dessen Position ist der Transmissionslichtempfänger 29 angeordnet.

Zu der Anordnung gemäß Fig. 1 ist noch anzumerken, dass die zweite Sendeoptik 21 und das Lichtaustrittsfenster 24 auch als ein einzige Element ausgebildet sein können, d.h. alternativ oder zusätzlich zu der Sendeoptik 21 kann das Lichtaustrittsfenster 24 als Sendeoptik mit strahlformenden Eigenschaften ausgebildet sein.

Außerdem muss der Streulichtempfänger 46 nicht unbedingt innerhalb der Lichtbeaufschlagungseinheit 28 angeordnet sein, sondern das zu detektierende Streulicht kann auch mittels eines Lichtleiters zu einem entfernt angeordneten Streulichtempfänger geführt werden.

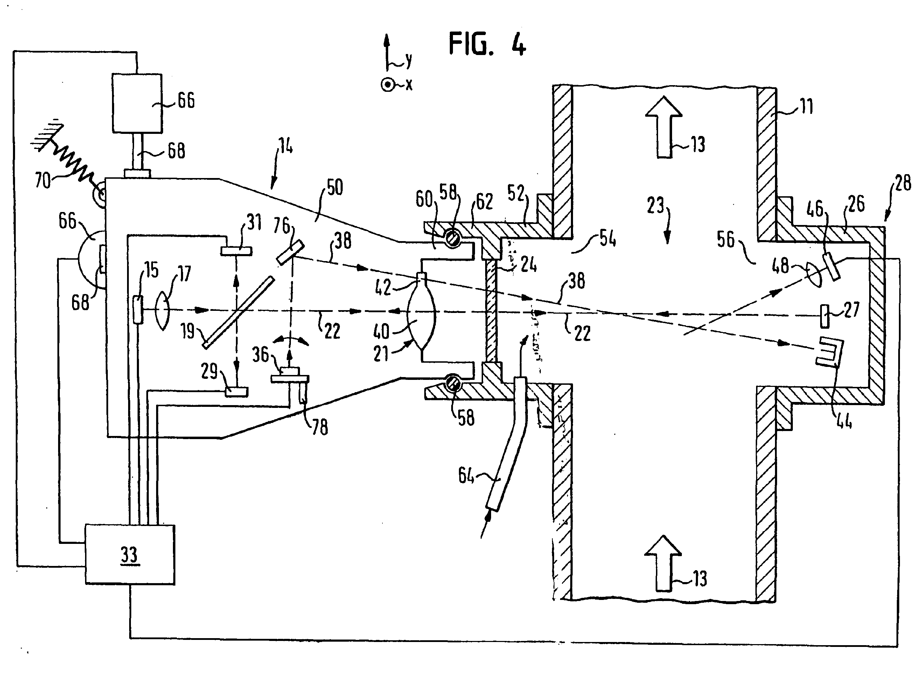

Fig. 4 zeigt eine alternative Ausführungsform der Messvorrichtung gemäß Fig. 1, mit den folgenden Unterschieden:
Bei der Ausführungsform gemäß Fig. 4 verlaufen der Transmissionslicht-Sendestrahl 22 und der Streulicht-Sendestrahl 38 zwar wiederum seitlich versetzt zueinander. Jedoch verlaufen die beiden Sendestrahlen 22, 38 derartig schräg geneigt zueinander, dass sie sich außerhalb der Sendereinheit 14 - also im Messvolumen 23 - kreuzen.

Durch eine Vertauschung der jeweiligen Anordnung der Lichtfalle 44 einerseits und des Streulichtempfängers 46 mit Empfangsoptik 48 andererseits wird gegenüber der Lichtbeaufschlagungseinheit 28 gemäß Fig. 1 eine Streulichtmessung für einen größeren Streuwinkel ermöglicht. Je nach Durchmesser des Kanals 11 kann durch diese Maßnahme auch sichergestellt werden, dass das Gesichtsfeld des Streulichtempfängers 46 nicht auf das Lichtaustrittsfenster 24 gerichtet ist und der Streulichtempfänger 46 somit nicht von eventuellem Störlicht beaufschlagt wird, das an dem Lichtaustrittsfenster 24 reflektiert oder gestreut wird.

Die Umlenkung des Streulicht-Sendestrahls 38 in der Sendereinheit 14 erfolgt mittels eines zusätzlichen, starr montierten Umlenkspiegels 76. Alternativ hierzu kann die Strahlumlenkung jedoch auch - wie in Fig. 1 - über den Strahlenteiler 19 erfolgen, oder der Streulicht-Sendestrahl 38 wird direkt - d.h. ohne Strahlumlenkung - in die gewünschte Richtung ausgesendet.

Schließlich ist in Fig. 4 auch die bereits erwähnte Möglichkeit gezeigt, dass mittels einer Stellschraube 78 beispielsweise die Lage bzw. die Ausrichtung des Streulichtsenders 36 justiert wird. Hierdurch können werksseitig der Streulicht-Sendestrahl 38 und der Transmissionslicht-Sendestrahl 22 relativ zueinander justiert werden. Im Übrigen sind die an der Trägerplattform 50 vorgesehenen optischen Bauelemente jedoch im regulären Messbetrieb der Messvorrichtung starr und in fester Relativlage zueinander an der Trägerplattform 50 montiert.

### Bezugszeichenliste

- 11: Kanal
- 13: Strömungsrichtung
- 14: Sendereinheit
- 15: Transmissionslichtsender
- 17: erste Sendeoptik
- 19: Strahlenteiler
- 21: zweite Sendeoptik
- 22: Transmissionslicht-Sendestrahl
- 23: Messvolumen
- 24: Lichtaustrittsfenster
- 26: Abdeckhaube
- 27: Reflektor
- 28: Lichtbeaufschlagungseinheit
- 29: Transmissionslichtempfänger
- 31: Referenzlichtempfänger
- 33: Auswerte- und Steuereinrichtung
- 36: Streulichtsender
- 38: Streulicht-Sendestrahl
- 40: Transmissionslicht-Abbildungsabschnitt
- 42: Streulicht-Abbildungsabschnitt
- 44: Lichtfalle
- 46: Streulichtempfänger
- 48: Empfangsoptik
- 50: Trägerplattform
- 52: Befestigungsflansch
- 54: erste Kanalöffnung
- 56: zweite Kanalöffnung
- 58: O-Ring
- 60: Hohlzapfenabschnitt
- 62: Kragenabschnitt
- 64: Reinigungsluftleitung
- 66: Stellmotor
- 68: Stößel
- 70: Zugfeder
- 72: Lichtfleck
- 74: Empfangselement
- 76: Umlenkungsspiegel
- 78: Stellschraube

- x, y: Schwenkrichtungen

## Patentansprüche

1. Partikelkonzentrations-Messvorrichtung zur Bestimmung einer Partikelkonzentration innerhalb eines Messvolumens (23) innerhalb eines von einem Partikel-enthaltenden Abgas durchströmten Kanals nach dem Prinzip der Transmissionslichtmessung und der Streulichtmessung,
wobei die Messvorrichtung wenigstens einen Lichtsender (15, 36) zum Aussenden von Sendelicht (22, 38) in das Messvolumen und wenigstens einen Lichtempfänger (29, 46) aufweist,
wobei mittels des Lichtempfängers (29) ein Anteil des durch Partikel im Messvolumen (23) gedämpften Sendelichts (22) detektierbar ist, und wobei mittels des Lichtempfängers (46) ein Anteil des Sendelichts (38) detektierbar ist, der an Partikeln im Messvolumen (23) gestreut wird,
**dadurch gekennzeichnet,**
**dass** die Messvorrichtung eine Sendereinheit (14) zumindest mit einem Lichtsender (15) zum Aussenden eines Transmissionslicht-Sendestrahls (22) und mit einem separaten Lichtsender (36) zum Aussenden eines Streulicht-Sendestrahls (38) für die Streulichtmessung aufweist,
wobei der Transmissionslicht-Sendestrahl (22) und der Streulicht-Sendestrahl (38) innerhalb der Sendereinheit (14) seitlich versetzt zueinander verlaufen und durch ein gemeinsames Lichtaustrittsfenster (24) der Sendereinheit in Richtung des Messvolumens (23) geführt sind.

2. Messvorrichtung nach Anspruch 1,
**dadurch gekennzeichnet,**
**dass** für den Transmissionslicht-Sendestrahl (22) und den Streulicht-Sendestrahl (38) eine gemeinsame Sendeoptik (21) vorgesehen ist, die an der Sendereinheit (14) bezüglich der Senderichtung vor dem Lichtaustrittsfenster (24) angeordnet oder durch das Lichtaustrittsfenster (24) gebildet ist, und die als eine geteilte Optik mit einem Transmissionslicht-Abbildungsabschnitt (40) und einem Streulicht-Abbildungsabschnitt (42) ausgebildet ist.

3. Messvorrichtung nach Anspruch 2,
**dadurch gekennzeichnet,**
**dass** der Transmissionslicht-Abbildungsabschnitt (40) als Sammellinse ausgebildet ist,
und/oder
**dass** der Streulicht-Abbildungsabschnitt (42) planparallel oder als Öffnung ausgebildet ist,
und/oder
**dass** der Streulicht-Abbildungsabschnitt (43) am Rand des Transmissionslicht-Abbildungsabschnitts (40) oder innerhalb des Transmissionslicht-Abbildungsabschnitts (40) angeordnet ist.

4. Messvorrichtung nach einem der vorhergehenden Ansprüche, **dadurch gekennzeichnet,**
**dass** der Transmissionslicht-Sendestrahl (22) und der Streulicht-Sendestrahl (38) innerhalb der Sendereinheit (14) schräg geneigt zueinander verlaufen,
und/oder
**dass** der Transmissionslicht-Sendestrahl (22) und der Streulicht-Sendestrahl (38) sich außerhalb der Sendereinheit (14) kreuzen.

5. Messvorrichtung nach einem der vorhergehenden Ansprüche,
**dadurch gekennzeichnet,**
**dass** der Transmissionslichtsender (15), der Lichtsender (36) für die Streulichtmessung und eine oder mehrere Sendeoptiken (17, 21), die den Verlauf des Transmissionslicht-Sendestrahls (22) und den Verlauf des Streulicht-Sendestrahls (38) festlegen, während des Messbetriebs der Messvorrichtung in einer starren Relativlage angeordnet sind.

6. Messvorrichtung nach einem der vorhergehenden Ansprüche,
**dadurch gekennzeichnet,**
**dass** der Transmissionslichtsender (15) eine Leuchtdiode aufweist und der Lichtsender (36) für die Streulichtmessung eine Laserdiode aufweist,
und/ oder
**dass** der Transmissionslichtsender (15) und der Lichtsender (36) für die Streulichtmessung zu einem alternierenden Aussenden des Transmissionslicht-Sendestrahls (22) und des Streulicht-Sendestrahls (38) ansteuerbar sind.

7. Messvorrichtung nach einem der vorhergehenden Ansprüche,
**dadurch gekennzeichnet,**
**dass** die optische Achse des Transmissionslicht-Sendestrahls (22) und die optische Achse des Streulicht-Sendestrahls (38) relativ zueinander justierbar sind.

8. Messvorrichtung nach einem der vorhergehenden Ansprüche,
**dadurch gekennzeichnet,**
**dass** die Messvorrichtung einen Transmissionslichtempfänger (29) und einen separaten Streulichtempfänger (46) aufweist,
wobei mittels des Transmissionslichtempfängers (29) ein Anteil des Transmissionslicht-Sendestrahls (22) detektierbar ist, der von Partikeln im Messvolumen (23) gedämpft wird, und wobei mittels des Streulichtempfängers (46) ein Anteil des Streulicht-Sendestrahls (38) detektierbar ist, der an Partikeln im Messvolumen (23) gestreut wird.

9. Messvorrichtung nach Anspruch 8,
**dadurch gekennzeichnet,**
**dass** der Streulichtempfänger (46) an einer Lichtbeaufschlagungseinheit (28) angeordnet ist, die an einer der Sendereinheit (14) gegenüberliegenden Seite des Messvolumens (23) angeordnet ist, und/ oder
**dass** das Gesichtsfeld des Streulichtempfängers (46) von dem Lichtaustrittsfenster (24) der Sendereinheit (14) weggeneigt ist.

10. Messvorrichtung nach einem der Ansprüche 8 oder 9,
**dadurch gekennzeichnet,**
**dass** der Transmissionslichtempfänger (29) in der Sendereinheit (14) angeordnet ist, wobei die Messvorrichtung an einer der Sendereinheit (14) gegenüberliegenden Seite des Messvolumens (23) eine Lichtbeaufschlagungseinheit (28) aufweist, an der ein Reflektor (27) zur Reflexion des Transmissionslicht-Sendestrahls (22) in Richtung des Transmissionslichtempfängers (29) vorgesehen ist,
oder
**dass** der Transmissionslichtempfänger (29) an einer Lichtbeaufschlagungseinheit (28) angeordnet ist, die an einer der Sendereinheit (14) gegenüberliegenden Seite des Messvolumens (23) angeordnet ist.

11. Messvorrichtung nach einem der vorhergehenden Ansprüche,
**dadurch gekennzeichnet,**
**dass** in der Sendereinheit (14) ferner ein Referenzlichtempfänger (31) und/oder ein Strahlenteiler (19) vorgesehen sind.

12. Messvorrichtung nach einem der vorhergehenden Ansprüche,
**dadurch gekennzeichnet,**
**dass** die Sendereinheit (14) ferner eine Trägereinrichtung (50) aufweist, an der der Transmissionslichtsender (15), der Lichtsender (36) für die Streulichtmessung und eine oder mehrere Sendeoptiken (17, 21), die den Verlauf des Transmissionslicht-Sendestrahls und den Verlauf des Streulicht-Sendestrahls festlegen, befestigt sind, wobei die Ausrichtung des Transmissionslicht-Sendestrahls (22) und des Streulicht-Sendestrahls (38) durch Verschwenken der Trägereinrichtung (50) justierbar ist.

13. Messvorrichtung nach Anspruch 12,
**dadurch gekennzeichnet,**
**dass** der Transmissionslichtsender (15), der Lichtsender (36) für die Streulichtmessung und die zugeordneten Sendeoptiken (17, 21) an der Trägereinrichtung (50) in einer vorbestimmten Relativlage befestigt sind,
und/oder
**dass** die Trägereinrichtung (50) um zwei senkrecht zueinander verlaufende Schwenkachsen verschwenkbar ist,
und/oder
**dass** die Trägereinrichtung (50) senkrecht zu der optischen Achse des Transmissionslicht-Sendestrahls (22) verschwenkbar ist, und/oder
**dass** die Trägereinrichtung (50) bezüglich des Lichtaustrittsfensters (24) verschwenkbar ist,
und/oder
**dass** die Trägereinrichtung (50) mittels eines Hohlzapfeneingriffs (60, 62) oder eines Kugelgelenks an der Umgebung des Lichtaustrittsfensters (24) angelenkt ist.

14. Messvorrichtung nach einem der Ansprüche 12 oder 13,
**dadurch gekennzeichnet,**
**dass** an der Trägereinrichtung (50) ferner ein Transmissionslichtempfänger (29) in einer vorbestimmten Relativlage zu dem Transmissionslichtsender (15), dem Lichtsender (36) für die Streulichtmessung und den zugeordneten Sendeoptiken (17, 21) befestigt ist.

15. Messvorrichtung nach einem der Ansprüche 12 bis 14,
**dadurch gekennzeichnet,**
**dass** die Messvorrichtung einen ortsauflösenden Transmissionslichtempfänger (29) aufweist, der mit einer Auswerte- und Steuereinrichtung (33) verbunden ist,
wobei mittels der Auswerte- und Steuereinrichtung in Abhängigkeit von Lichtempfangssignalen des Transmissionslichtempfängers (29) ein Justagesteuersignal zum Justieren der Messvorrichtung erzeugbar ist, und
wobei die Messvorrichtung eine Antriebseinrichtung (66, 68) aufweist, durch die die Trägereinrichtung (50) in Abhängigkeit von dem Justagesteuersignal motorisch verschwenkbar ist.

16. Messvorrichtung nach Anspruch 15,
**dadurch gekennzeichnet,**
**dass** die Antriebseinrichtung zwei Stellmotoren (66) aufweist, mittels derer die Trägereinrichtung (50) in zwei zueinander senkrechten Richtungen verschwenkbar ist,
und/oder
**dass** ferner wenigstens eine Vorspanneinrichtung (70) vorgesehen ist, durch die die Trägereinrichtung (50) in wenigstens einer Richtung vorgespannt ist,
und/oder
**dass** die Ausrichtung des Transmissionslicht-Sendestrahls (22) und des Streulicht-Sendestrahls (38) in Abhängigkeit von dem Justagesteuersignal derart justierbar ist, dass der Transmissionslicht-Sendestrahl (22) den Transmissionslichtempfänger (29) an einer zentralen Position beaufschlagt.

17. Verfahren zur Bestimmung einer Partikelkonzentration innerhalb eines Messvolumens (23) innerhalb eines von einem Partikel-enthaltenden Abgas durchströmten Kanals nach dem Prinzip der Transmissionslichtmessung und der Streulichtmessung,
**dadurch gekennzeichnet,**
**dass** ein Transmissionslicht-Sendestrahl (22) eines Lichtsenders (15) und ein Streulicht-Sendestrahl (38) eines weiteren separaten Lichtsenders (36) innerhalb einer Sendereinheit (14) seitlich versetzt zueinander und durch ein gemeinsames Lichtaustrittsfenster (24) der Sendereinheit in Richtung des Messvolumens (23) geführt werden.

18. Verfahren nach Anspruch 17,
**dadurch gekennzeichnet,**
**dass** die Ausrichtung des Transmissionslicht-Sendestrahls (22) und des Streulicht-Sendestrahls (38) durch Verschwenken einer Trägereinrichtung (50) der Sendereinheit (14) justiert wird, an der der Transmissionslichtsender (15), der weitere Lichtsender (36) und eine oder mehrere Sendeoptiken (17, 21), die den Verlauf des Transmissionslicht-Sendestrahls und den Verlauf des Streulicht-Sendestrahls festlegen, befestigt sind.

19. Verfahren nach Anspruch 18,
**dadurch gekennzeichnet,**
**dass** der Transmissionslicht-Sendestrahl (22) einen ortsauflösenden Transmissionslichtempfänger (29) beaufschlagt,
wobei in Abhängigkeit von Lichtempfangssignalen des Transmissionslichtempfängers ein Justagesteuersignal erzeugt wird, und wobei die Trägereinrichtung (50) in Abhängigkeit von dem Justagesteuersignal motorisch verschwenkt wird.

## Claims

1. A particle concentration measurement apparatus for determining a particle concentration within a measurement volume (23) inside a passage, through which an exhaust gas including particles flows, according to the transmitted light measurement principle and the scattered light measurement principle,
wherein the measurement apparatus comprises at least one light transmitter (15, 36) for the transmission of transmitted light (22, 38) into the measurement volume and at least one light receiver (29, 46),
wherein a proportion of the transmission light (22) damped by particles in the measurement volume (23) is detectable by means of the light receiver (29),
and wherein a proportion of the transmitted light (38) scattered at particles in the measurement volume (32) is detectable by means of the light receiver (46),
**characterized in that**
the measurement apparatus comprises a transmission unit (14) having at least one light transmitter (15) for the transmission of a transmitted light-transmission beam (22) and having a separate light transmitter (36) for the transmission of a scattered light-transmission beam (38) for the scattered light measurement,
wherein the transmitted light-transmission beam (22) and the scattered light transmission beam (38) run laterally offset from one another within the transmission unit (14) and are guided in the direction of the measurement volume (23) through a common light exit window (24) of the transmission unit.

2. A measurement apparatus in accordance with claim 1,
**characterized in that**
a common transmission optic (21) is provided for the transmitted light-transmission beam (22) and for the scattered light-transmission beam (38) which is arranged at the transmission unit (14) in front of the light exit window (24) with regard to the transmission direction or is formed by the light exit window (24) and which is designed as a divided optic having a transmitted light imaging section (40) and a scattered light imaging section (42).

3. A measurement apparatus in accordance with claim 2,
**characterized in that**
the transmitted light imaging section (40) is designed as a collecting lens, and/ or
**in that** the scattered light imaging section (42) is designed as plane parallel or as an opening,
and/or
**in that** the scattered light imaging section (43) is arranged at the boundary of the transmitted light imaging section (40) or within the scattered light imaging section (40).

4. A measurement apparatus in accordance with any one of the preceding claims,
**characterized in that**
the transmitted light-transmission beam (22) and the scattered light-transmission beam (38) run obliquely inclined to one another within the transmission unit (14),
and/or
**in that** the transmitted light-transmission beam (22) and the scattered light-transmission beam (38) cross one another outside of the transmission unit (14).

5. A measurement apparatus in accordance with any one of the preceding claims,
**characterized in that**
the transmission light transmitter (15), the light transmitter (36) for the scattered light measurement and one or more transmission optics (17, 21) which determine the course of the transmitted light-transmission beam (22) and the course of the scattered light-transmission beam (38) are arranged in a rigid relative position during the measurement operation of the measurement apparatus.

6. A measurement apparatus in accordance with any one of the preceding claims,
**characterized in that**
the transmission light transmitter (15) has a light emitting diode and the light transmitter (36) for the scattered light measurement has a laser diode,
and/ or
**in that** the transmission light transmitter (15) and the light transmitter (36) for the scattered light measurement are controllable for an alternating transmission of the transmitted light-transmission beam (22) and of the scattered light-transmission beam (38).

7. A measurement apparatus in accordance with any one of the preceding claims,
**characterized in that**
the optical axis of the transmitted light-transmission beam (22) and the optical axis of the scattered light-transmission beam (38) are adjustable relative to one another.

8. A measurement apparatus in accordance with any one of the preceding claims,
**characterized in that**
the measurement apparatus comprises a transmission light receiver (29) and a separate scattered light receiver (46),
wherein a proportion of the transmitted light-transmission beam (22) which is damped by particles in the measurement volume (23) is detectable by means of the transmission light receiver (29), and wherein a proportion of the scattered light-transmission beam (38) which is scattered at particles in the measurement volume (23) is detectable by means of the scattered light receiver (46).

9. A measurement apparatus in accordance with claim 8,
**characterized in that**
the scattered light receiver (46) is arranged at a light exposure unit (28) which is arranged at a side of the measurement volume (23) opposite from the transmission unit (14),
and/or
**in that** the viewing field of the scattered light receiver (46) is tilted away from the light exit window (24) of the transmission unit (14).

10. A measurement apparatus in accordance with claim 8 or claim 9, **characterized in that**
the transmission light receiver (29) is arranged in the transmission unit (14), wherein the measurement apparatus has a light exposure unit (28) at a side of the measurement volume (23) opposite from the transmission unit (14) at which light exposure unit a reflector (27) is provided for the reflection of the transmitted light-transmission beam (22) in the direction of the transmission light receiver (29),
or
**in that** the transmission light receiver (29) is arranged at a light exposure unit (28) which is arranged at a side of the measurement volume (23) opposite from the transmission unit (14).

11. A measurement apparatus in accordance with any one of the preceding claims,
**characterized in that**
a reference light receiver (31) and/or a beam divider (19) is/are further provided in the transmission unit (14).

12. A measurement apparatus in accordance with any one of the preceding claims,
**characterized in that**
the transmission unit (14) further comprises a carrier device (50) at which the transmission light transmitter (15), the light transmitter (36) for the scattered light measurement and one or more transmission optics (17, 21), which determine the course of the transmitted light-transmission beam and the course of the scattered light-transmission beam, are attached, wherein the alignment of the transmitted light-transmission beam (22) and the scattered light-transmission beam (38) are adjustable by pivoting the carrier device (50).

13. A measurement apparatus in accordance with claim 12,
**characterized in that**
the transmission light transmitter (15), the light transmitter (36) for the scattered light measurement and the associated transmission optics (17, 21) are attached at the carrier device (50) in a predetermined relative position,
and/or
**in that** the carrier device (50) is pivotable about two pivot axes running perpendicular to one another,
and/or
**in that** the carrier device (50) is pivotable perpendicular to the optical axis of the transmitted light-transmission beam (22),
and/ or
**in that** the carrier device (50) is pivotable with regard to the light exit window (24),
and/or
**in that** the carrier device is pivotally connected at the surrounding of the light exit window (24) by engagement of a hollow spigot (60, 62) or of a ball joint.

14. A measurement apparatus in accordance with one of the claims 12 or 13, **characterized in that**
a transmission light receiver (29) is further attached at the carrier device (50) in a predefined relative position relative to the transmission light transmitter (15), to the light transmitter (36) for the scattered light measurement and to the associated transmission optics (17, 21).

15. A measurement apparatus in accordance with any one of the claims 12 to 14,
**characterized in that**
the measurement apparatus has a spatially resolving transmission light receiver (29) which is connected to an evaluation and control unit (33), wherein an alignment control signal for the alignment of the measurement apparatus can be generated in dependence on light received signals of the transmission light receiver (29) by means of the evaluation and control unit, and
wherein the measurement apparatus comprises a drive unit (66, 68) by means of which the carrier device (50) is pivotable by motor means in dependence on the alignment control signal.

16. A measurement apparatus in accordance with claim 15,
**characterized in that**
the drive unit has two servo motors (66) by means of which the carrier device (50) is pivotable in two directions perpendicular to one another, and/or
**in that** at least one pretensioning device (70) is further provided, by means of which the carrier device (50) can be pretensioned in at least one direction,
and/ or
**in that** the alignment of the transmitted light-transmission beam (22) and the scattered light-transmission beam (38) are adjustable in dependence on the adjustment control signal such that the transmitted light-transmission beam (22) is incident at the transmission light receiver (29) in a central position.

17. A method for determining a particle concentration within a measurement volume (23) inside a passage through which an exhaust gas including particles flows, according to the transmission light measurement principle and the scattered light measurement principle,
**characterized in that**
a transmitted light-transmission beam (22) of a light transmitter (15) and a scattered light-transmission beam (38) of a further separate light transmitter (36) are guided laterally offset to one another within a transmission unit (14) and through a common light exit window (24) of the transmission unit in the direction of the measurement volume (23).

18. A method in accordance with claim 17,
**characterized in that**
the alignment of the transmitted light-transmission beam (22) and the scattered light-transmission beam (38) is adjusted by pivoting a carrier device (50) of a transmission unit (14) at which the transmission light transmitter (15), the further light transmitter (36) and one or more transmission optics (17, 21), which determine the course of the transmitted light-transmission beam and the course of the scattered light-transmission beam, are attached.

19. A method in accordance with claim 18,
**characterized in that**
the transmitted light-transmission beam (22) is incident at a spatially resolving transmission light receiver (29),
wherein an alignment control signal is generated in dependence on light received signals of the transmission light receiver, and
wherein the carrier device (50) is pivoted by motor means in dependence on the alignment control signal.

## Revendications

1. Dispositif de mesure de concentration en particules pour déterminer une concentration en particules à l'intérieur d'un volume de mesure (23) à l'intérieur d'un canal traversé par un gaz d'échappement contenant des particules, suivant le principe de la mesure de lumière transmise et de la mesure de lumière diffuse,
dans lequel le dispositif de mesure comprend au moins un émetteur de lumière (15, 36) pour émettre une lumière émise (22, 38) dans le volume de mesure et au moins un récepteur de lumière (29, 46),
dans lequel au moyen du récepteur de lumière (29) il est possible de détecter une part de la lumière émise (22) atténuée par des particules dans le volume de mesure (23), et
dans lequel au moyen du récepteur de lumière (46) il est possible de détecter une part de lumière émise (38) qui est diffusée sur des particules dans le volume de mesure (23),
**caractérisé en ce que**
le dispositif de mesure comprend une unité émettrice (14) avec au moins un émetteur de lumière (15) pour émettre un rayon émis de lumière de transmission (22) et avec un émetteur de lumière séparé (36) pour émettre un rayon émis de lumière diffuse (38) pour la mesure de lumière diffuse,
dans lequel le rayon émis de lumière de transmission (22) et le rayon émis de lumière diffuse (38) se propagent de manière décalée latéralement l'un par rapport à l'autre à l'intérieur de l'unité émettrice (14) et sont menés en direction du volume de mesure (23) à travers une fenêtre de sortie de lumière (24) commune de l'unité émettrice.

2. Dispositif de mesure selon la revendication 1, **caractérisé en ce que** pour le rayon émis de lumière de transmission (22) et pour le rayon émis de lumière diffuse (38) il est prévu une optique d'émission commune (21), qui est agencée sur l'unité émettrice (14) devant la fenêtre de sortie de lumière (24) par référence à la direction d'émission, ou bien qui est formée par la fenêtre de sortie de lumière (24), et qui est réalisée sous forme d'optique divisée avec une section d'imagerie de lumière de transmission (40) et une section d'imagerie de lumière diffuse (42).

3. Dispositif de mesure selon la revendication 2, **caractérisé en ce que** la section d'imagerie de lumière de transmission (40) est réalisée sous forme de lentille convergente, et/ou
la section d'imagerie de lumière diffuse (42) est réalisée suivant des plans parallèles ou sous forme d'une ouverture, et/ou la section d'imagerie de lumière diffuse (43) est agencée à la bordure de la section d'imagerie de lumière de transmission (40) ou à l'intérieur de la section d'imagerie de lumière de transmission (40).

4. Dispositif de mesure selon l'une des revendications précédentes,
**caractérisé en ce que**
le rayon émis de lumière de transmission (22) et le rayon émis de lumière diffuse (38) se propagent inclinés en oblique l'un par rapport à l'autre à l'intérieur de l'unité émettrice (14), et/ou
le rayon émis de lumière de transmission (22) et le rayon émis de lumière diffuse (38) se croisent à l'extérieur de l'unité émettrice (14).

5. Dispositif de mesure selon l'une des revendications précédentes,
**caractérisé en ce que**
l'émetteur de lumière de transmission (15), l'émetteur de lumière (36) pour la mesure de lumière diffuse et une ou plusieurs optiques d'émission (17, 21), qui déterminent le tracé du rayon émis de lumière de transmission (12) et le tracé du rayon émis de lumière diffuse (38), sont agencés dans une situation relative rigide pendant le fonctionnement en mesure du dispositif de mesure.

6. Dispositif de mesure selon l'une des revendications précédentes,
**caractérisé en ce que**
l'émetteur de lumière de transmission (15) comprend une diode électroluminescente et l'émetteur de lumière (36) pour la mesure de lumière diffuse comprend une diode à laser, et/ou
l'émetteur de lumière de transmission (15) et l'émetteur de lumière (36) pour la mesure de lumière diffuse sont susceptibles d'être pilotés pour émettre en alternance le rayon émis de lumière de transmission (22) et le rayon émis de lumière diffuse (38).

7. Dispositif de mesure selon l'une des revendications précédentes,
**caractérisé en ce que**
l'axe optique du rayon émis de lumière de transmission (22) et l'axe optique du rayon émis de lumière diffuse (38) sont susceptibles d'être ajustés l'un par rapport à l'autre.

8. Dispositif de mesure selon l'une des revendications précédentes,
**caractérisé en ce que**
le dispositif de mesure comprend un récepteur de lumière de transmission (29) et un récepteur de lumière diffuse (46) séparés, de sorte qu'au moyen du récepteur de lumière de transmission (29) il est possible de détecter une part du rayon émis de lumière de transmission (22) qui est atténuée par des particules dans le volume de mesure (23), et de sorte qu'au moyen du récepteur de lumière diffuse (46) il est possible de détecter une part du rayon émis de lumière diffuse (38) qui est diffusée sur les particules dans le volume de mesure (23).

9. Dispositif de mesure selon la revendication 8, **caractérisé en ce que** le récepteur de lumière diffuse (46) est agencé sur une unité d'impact de lumière (28), qui est agencée sur un côté du volume de mesure (23) à l'opposé de l'unité émettrice (14), et/ou
le champ de vision du récepteur de lumière diffuse (46) est incliné en éloignement de la fenêtre de sortie de lumière (24) de l'unité émettrice (14).

10. Dispositif de mesure selon l'une des revendications 8 ou 9,
**caractérisé en ce que**
le récepteur de lumière de transmission de (29) est agencé dans l'unité émettrice (14), le dispositif de mesure comprenant, sur un côté du volume de mesure (23) opposé à l'unité émettrice (14), une unité d'impact de lumière (28) sur laquelle est prévu un réflecteur (27) pour la réflexion du rayon émis de lumière de transmission (22) en direction du récepteur de lumière de transmission (29), ou
le récepteur de lumière de transmission (29) est agencé sur une unité d'impact de lumière (28) qui est agencée sur un côté du volume de mesure (23) opposé à l'unité émettrice (14).

11. Dispositif de mesure selon l'une des revendications précédentes,
**caractérisé en ce que**
il est prévu en outre un récepteur de lumière de référence (31) et/ou un diviseur de rayon (19) dans l'unité émettrice (14).

12. Dispositif de mesure selon l'une des revendications précédentes,
**caractérisé en ce que**
l'unité émettrice (14) comprend en outre un moyen formant support (50), sur lequel sont fixés l'émetteur de lumière de transmission (15), l'émetteur de lumière (36) pour la mesure de lumière diffuse et une ou plusieurs optiques émettrices (17, 21) qui déterminent le tracé du rayon émis de lumière de transmission et le tracé du rayon émis de lumière diffuse, dans lequel l'orientation du rayon émis de lumière de transmission (22) et du rayon émis de lumière diffuse (38) peut être ajustée par pivotement du moyen formant support (50).

13. Dispositif de mesure selon la revendication 12, **caractérisé en ce que**
l'émetteur de lumière de transmission (15), l'émetteur de lumière (36) pour la mesure de lumière diffuse et les optiques émettrices associées (17, 21) sont fixés sur le moyen formant support (50) dans une situation relative prédéterminée, et/ou
le moyen formant support (50) est capable de pivoter autour de deux axes de pivotement qui s'étendent perpendiculairement l'un à l'autre, et/ou
le moyen formant support (50) est capable de pivoter perpendiculairement à l'axe optique du rayon émis de lumière de transmission (22), et/ou
le moyen formant support (50) est capable de pivoter par rapport à la fenêtre de sortie de lumière (24), et/ou
le moyen formant support (50) est articulé à l'entourage de la fenêtre de sortie de lumière (24) au moyen d'un engagement à tenon creux (60, 62) ou d'une articulation à rotule.

14. Dispositif de mesure selon l'une des revendications 12 ou 13,
**caractérisé en ce que**
un récepteur de lumière de transmission (29) et en outre fixé sur le moyen formant support (50) dans une situation relative prédéterminée par rapport à l'émetteur de lumière de transmission (15), à l'émetteur de lumière (36) pour la mesure de lumière diffuse, et aux optiques émettrices (17, 21) associées.

15. Dispositif de mesure selon l'une des revendications 12 à 14,
**caractérisé en ce que**
le dispositif de mesure comprend un récepteur de lumière de transmission (29) à résolution locale, qui est relié à un système d'évaluation et de commande (33),
dans lequel un signal de commande d'ajustement destiné à l'ajustement du dispositif de mesure peut être engendré au moyen du système d'évaluation et de commande en fonction des signaux de réception de lumière du récepteur de lumière de transmission (29), et
le dispositif de mesure comprend un moyen d'entraînement (66, 68), grâce auquel le moyen formant support (50) peut être pivoté de façon motorisée en fonction du signal de commande d'ajustement.

16. Dispositif de mesure selon la revendication 15, **caractérisé en ce que**
le moyen d'entraînement comprend deux servomoteurs (66), au moyen desquels le moyen formant support (50) est capable de pivoter dans deux directions mutuellement perpendiculaires, et/ou
il est en outre prévu un moyen de mise sous précontrainte (70) via lequel le moyen formant support (50) est précontraint dans au moins une direction, et/ou
l'orientation du rayon émis de lumière de transmission (22) et du rayon émis de lumière diffuse (38) peut être ajustée en fonction du signal de commande d'ajustement de telle façon que le rayon émis de lumière de transmission (22) tombe sur le récepteur de lumière de transmission (29) à une position centrale.

17. Procédé pour déterminer une concentration en particules à l'intérieur d'un volume de mesure (23) à l'intérieur d'un canal traversé par un gaz d'échappement contenant des particules suivant le principe de la mesure de lumière transmise et de la mesure de lumière diffuse,
**caractérisé en ce qu'**un rayon émis de lumière de transmission (22) d'un émetteur de lumière (15) et un rayon émis de lumière diffuse (38) d'un autre émetteur de lumière (36) séparé sont émis à l'intérieur d'une unité émettrice (14) de manière décalée dans le temps l'un par rapport à l'autre et sont menés à travers une fenêtre de sortie de lumière (24) commune de l'unité émettrice en direction du volume de mesure (23).

18. Procédé selon la revendication 17, **caractérisé en ce que**
l'orientation du rayon émis de lumière de transmission (22) et du rayon émis de lumière diffuse (38) est ajustée par pivotement d'un moyen formant support (50) de l'unité émettrice (14), sur lequel sont fixés l'émetteur de lumière de transmission (15), l'autre émetteur de lumière (36) et une ou plusieurs optiques (17, 21), qui déterminent le tracé du rayon émis de lumière de transmission et le tracé du rayon émis de lumière diffuse.

19. Procédé selon la revendication 18, **caractérisé en ce que**
le rayon émis de lumière de transmission (22) tombe sur un récepteur de lumière de transmission (29) à résolution locale, et
en fonction des signaux de réception de lumière du récepteur de lumière de transmission, on engendre un signal de commande d'ajustement, et le moyen formant support (50) est pivoté de façon motorisée en fonction du signal de commande d'ajustement.
